# EUROPÄISCHE PATENTSCHRIFT

(11) **EP 1 764 962 B1**
(45) Veröffentlichungstag und Bekanntmachung des Hinweises auf die Patenterteilung: **27.05.2009**
(21) Anmeldenummer: 06018821.6
(22) Anmeldetag: 08.09.2006
(51) Int. Cl.: H04L 12/56, H04L 12/14

(54) **Verfahren zur Steuerung der Kommunikationswege**
Control method for communications paths
Procédé de contrôle de chemins de communication

(30) Priorität: 19.09.2005 DE 102005044609
(43) Veröffentlichungstag der Anmeldung: 21.03.2007
(73) Patentinhaber: Deutsche Telekom AG, 53113 Bonn (DE)
(72) Erfinder: Grünert, Jörn, 53175 Bonn (DE); Sutter, Emmanuel, 53173 Bonn (DE)

(56) Entgegenhaltungen:
- WO-A-20/05004518
- US-A1- 2003 005 148
- SORTE DI D ET AL: "MINIMUM PRICE INTER-DOMAIN ROUTING ALGORITHM" IEEE COMMUNICATIONS LETTERS, IEEE SERVICE CENTER, PISCATAWAY, NJ, US, Bd. 6, Nr. 4, April 2002 (2002-04), Seiten 165-167, XP001122454 ISSN: 1089-7798

## Beschreibung

### Hintergrund der Erfindung:

Im Markt ist eine solche Funktionalität bisher nicht umfassend in einem Produkt beschrieben bzw. abgebildet.

Zurzeit werden Produkte im Markt angeboten, die in Ansätzen kommende oder gehende Verbindungen nach den Wünschen des Nutzers routen.

Eine Möglichkeit, beide Richtungen kostenoptimiert nach den Wünschen des Users im Routing abzuarbeiten, ist bisher nicht vorhanden.

Aus der Druckschrift der WO 2005 004518A ist ein Verfahren zur Auswahl des günstigsten Anbieters bekannt. Zur Vermeidung der fehlenden Technizität wurden ebenfalls Kriterien wie Sprachqualität oder Art der Dienste angegeben, wobei ein Parameter benutzt wird, um eine Auswahl zu steuern. Das mobile Endgerät kann anhand eines bestimmten Parameters entscheiden, welchen Dienstleister es wählt, und nimmt dann diesen Dienstleistern, um eine Verbindung zu einem anderen Endgerät aufzubauen. Die Steuerung erfolgt zusätzlich noch in einem zeitlichen Rahmen.

Aus der Druckschrift US2003 005148A1 ist ein Verfahren zur Auswahl eines Kommunikationspfades bekannt. Hierbei speichert ein Server Kontrollinformationen zur Einstellung des Netzwerks, die für einen bestimmten Dienst benötigt werden. Wenn ein Benutzerterminal einen Dienst anfordert, werden aus der Datenbank die Netzwerkkontrollinformationen geladen und der Benutzer kann nach einer interaktiven Zustimmung entscheiden, dass nun die Kontrollinformationen im Netzwerk umgesetzt werden, damit sein Dienst mit der notwendigen Qualität arbeitet.

Aus der Druckschrift Minimum Price Inter-Domain Routing Algorithm ICC April 2002 (2002-04) Seiten 165-167 XP001122454 ISSN 1089.7798 wird ein Verfahren zum Routen von IP-Paketen zu Diensten offenbart. Das die geringsten Kosten verursacht. Auch dieser Ansatz trifft die Erfindung nicht, mit Ihrem Ansatz lediglich gebündelte Kommunikationsadresse für eine Verbindung zu einer Vielzahl von Endgeräten zu nutzen.

### Überblick über die Erfindung:

Aufgabe der Erfindung ist ein intelligentes Routen von Kommunikationsanforderungen, wobei die Qualität der Dienste (QoS) berücksichtigt wird.

Gelöst wird diese Aufgabe durch Erfindungen mit den Merkmalen der unabhängigen Ansprüche. Die Unteransprüche stellen bevorzugte Ausführungsformen dar.

Mit dem beschrieben Verfahren sollen Kommunikationsverkehre in abgehender sowie in ankommender Richtung zu Zielen in beliebigen Netzen intelligent und serviceoptimiert geroutet werden.

In der bevorzugten Form wird ein Softwareclient verwendet, der auf dem genutzten Endgerät (Festnetztelefon, Mobiltelefon, PDA, PC/Laptop, etc.) installiert ist und der mit einem zentralen Server im Netz kommuniziert. Das Zusammenspiel dieser beiden Komponenten ermöglicht die im Folgenden beschriebenen Routings von Anrufen oder anderen Kommunikationsformen.

Die Software ermöglicht es Nutzern, ein persönliches Erreichbarkeitsprofil zu erstellen. Dabei kann der User entweder selbst konfigurieren oder aus den verfügbaren Standardprofilen auswählen. Über diese Einstellungen der Profile optimiert der Client die Qualität des Services des Nutzers für kommende und gehende Anrufe, indem die jeweils kostengünstigste Verbindungsvariante genutzt wird. Weiterhin wird so eine netz- und qualitätsoptimierte Verbindung hergestellt.

Der zentrale Server verarbeitet die Informationen des Softwareclients, überwacht die abgehenden und kommenden Verkehre zum Nutzer und übernimmt das Routing entsprechend den Vorgaben des Benutzers. Die Vorgaben können lokal auf dem Client abgelegt werden oder zentral auf dem Server.

Bei eingehenden Anrufen prüft der Client auf dem Endgerät ständig die Netzumgebung des Endgerätes (Festnetz, DSL, GPRS, UMTS, W-LAN, WiMax, VoIP, Bluetooth...) und übermittelt diese Informationen an den zentralen Server.

Die Übermittlung erfolgt dynamisch und automatisch über den Client auf dem Endgerät ohne aktive Einwirkung des Nutzers. Bei einigen Endgeräten, die eine zusätzliche Installation eines Clients nicht erlauben, wie einem Festnetztelefon, wird von einem festen Status und einer festen Qualität ausgegangen, die auf dem Serversystem hinterlegt wird.

Alternativ ist auch die Aktivierung der Übermittlungsfunktion durch den Nutzer möglich.

Damit ist sichergestellt, dass grundsätzlich immer zentral die Information verfügbar ist, über welches Netz der Nutzer serviceoptimiert erreicht werden kann.

Ankommende Anrufe werden somit bei aktivierter Funktionalität über die für den Nutzer günstigste Netzvariante zugeführt. Ein Anruf aus dem Festnetz zum Mobilfunkanschluss des Nutzers wird so z.B. direkt unter Umgehung des Netzüberganges auf den Festnetzanschluss des Nutzers umgeleitet, wodurch der Nutzer ggf. Gutschriften über seine Festnetzrechnung erhält (Switch & Profit-Modell).

Ankommende Anrufe werden netz- und qualitätsoptimiert zugestellt, d.h. befindet sich der Nutzer unterwegs in einer W-LAN-Umgebung, und hat der Client den Hotspot identifiziert und den Nutzer eingeloggt, dann wird der Anruf als VoIP-Call zugestellt.

Ist der Nutzer in einem Gebiet ohne GPS bzw. GSM-Empfang unterwegs, sodass keine Lokalisierung erfolgen kann, werden die Anrufe durch eine Defaulteinstellung automatisch, z.B. auf sein Festnetztelefon, geroutet (andere Defaulteinstellungen sind möglich; alternativ zu einem anderen, voreingestellten Endgerät oder Zugangsnetz).

Es ist auch denkbar, dass der Anruf auf das Festnetz geroutet wird, wenn das Mobiltelefon im Bereich des Festnetztelefons geortet wurde. Es kann auch festgelegt werden, dass ein paralleles Klingeln erfolgt oder ein zeitlich versetztes Klingeln auf den Endgeräten in unterschiedlicher Reihenfolge, je nach dem Serviceprofil, das vornehmlich auf Telefonnummern basiert. Hierzu ist ferner die Übertragung von Telefonnummern und Adressen aus Datenbanken, wie Outlook oder Oracle, möglich, an den Server möglich, um auch Gruppen von Anrufern einfach zu bilden.

Bei abgehenden Anrufen prüft der Client ständig die Netzumgebung des Endgerätes (Festnetz, DSL, GPRS, UMTS, W-LAN, WiMax, VoIP, Bluetooth...) und übermittelt diese Informationen an den zentralen Server. Die Übermittlung erfolgt dynamisch und automatisch über den Client, ohne aktive Einwirkung des Nutzers. Alternativ ist auch die Aktivierung der Übermittlungsfunktion durch den Nutzer möglich. Damit ist sichergestellt, dass zentral die Information verfügbar ist, wo sich der Nutzer befindet.

Wenn der Nutzer eine abgehende Verbindung aufbauen möchte, wird der Client je nach aktiviertem Nutzerprofil z.B. die kostengünstigste Verbindung in der gewünschten Qualität aufbauen. Dabei ist es nicht notwendig, dass der Nutzer Vorwahlen, PIN-Nummern oder Ähnliches eingibt. Der Softwareclient erledigt die notwendigen Schritte automatisch.

Befindet sich der Nutzer unterwegs in einer W-LAN-Umgebung, und hat der Client den Hotspot identifiziert und den Nutzer eingeloggt, wird der Anruf dann als VoIP-Call behandelt.

Befindet sich der Nutzer in seiner Wohnung, kann er sein Mobiltelefon nutzen und damit zu Festnetzkonditionen telefonieren. Der Client hat die Netzumgebung geprüft, stellt z.B. eine Verbindung über Bluetooth zu einer entsprechenden TK-Anlage des Nutzers her und initiiert eine Festnetznetzverbindung. Alternativ könnte der Client auch eine Bluetooth-Verbindung zum PC des Nutzers (Voraussetzung: Bluetooth-Fähigkeit des PC und Internetzugang) herstellen und eine VoIP-Verbindung aufbauen.

Um den Dienst zu nutzen, muss sich der Kunde einmalig im Internet registrieren. Dabei reichen minimale Angaben, wie Telefonnummer und Handynummer.

### Kurze Figurenbeschreibung:

Im Einzelnen zeigt
- Fig. 1: eine Vielzahl von Endgeräten, die sich über unterschiedliche Netzwerke an einem zentralen System anmelden;
- Fig. 2: eine Umleitung eines Anrufs eines mobilen Endgerätes, über einen PC;
- Fig. 3: eine Umleitung eines Anrufs über GSM anstatt über das Internet;
- Fig. 4: eine Umleitung eines Anrufs über UMTS anstatt über das Internet;
- Fig. 5: eine Umleitung eines Anrufs über das Internet anstatt über GSM;
- Fig. 6: eine Einrichtung des Profils des Benutzers.

### Beschreibung einer bevorzugten Ausführungsform

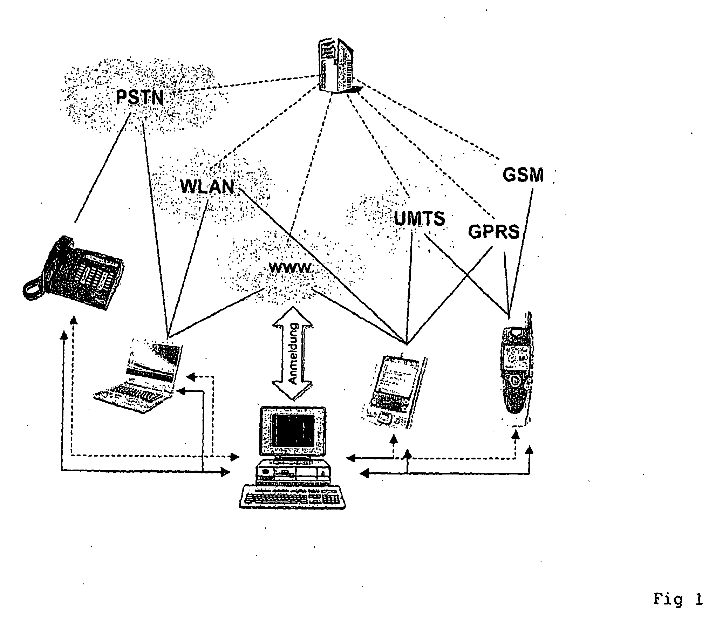

Die Fig. 1 zeigt das zentrale Serversystem, das über eine Vielzahl von Netzwerken mit den mobilen oder stationären Endgeräten verbunden ist. So ist das Telefon über das verbindungsorientierte PSTN-Netzwerk mit dem zentralen Server verbunden. Der Laptop ist einerseits über das Telefonnetzwerk, das WLAN-Netzwerk und das Internet mit dem zentralen Serversystem verbunden. Der PDA ist über das Internet über das WLAN, über UMTS oder GPRS mit dem zentralen Serversystem verbunden. Das Handy ist über UMTS, GSM und GRPS mit dem Serversystem verbunden. Der Rechner, dient in der Regel zur Konfiguration des Accounts und um über das Internet die einzelnen Endgeräte beim Serversystem anzumelden. Diese Anmeldung ist mehr eine Registrierung, um auf dieser Basis eine Erstellung der Profile sowie eine Übertragung von Telefonnummern durchzuführen, die Bestandteile des Profils sein können. Sobald die Einrichtung erfolgt ist, melden sich die Endgeräte separat beim Computer an. Es ist auch denkbar, dass die einzelnen Endgeräte über den Computer mit Hilfe von Bluetooth oder über andere Netzwerkformen verbunden sind, sodass der Computer mit dem zentralen Server kommuniziert und eine kostengünstige Verbindung zur Verfügung stellt.

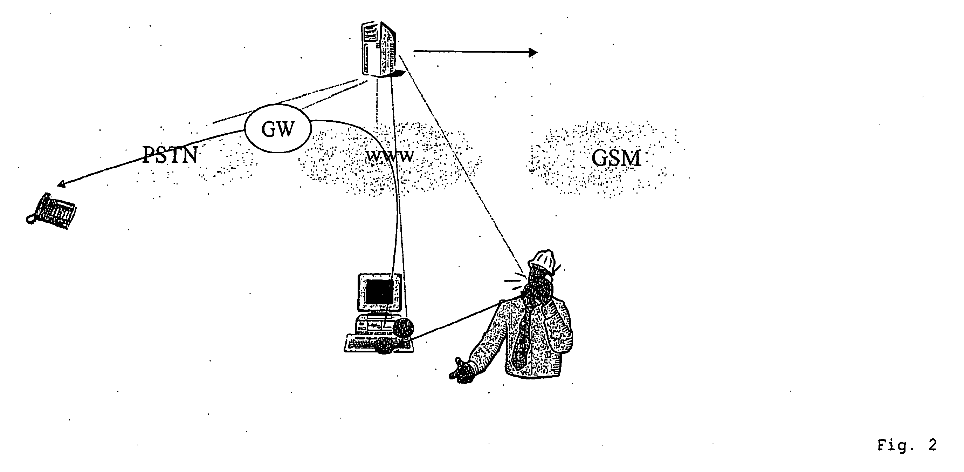

Nachdem nun ein Profil eingerichtet wurde, stellt die Fig. 2 eine mögliche intelligente Form der Kommunikation dar. Der Benutzer möchte zum Beispiel seine Frau über sein Handy anrufen. Er gibt die Rufnummern auf dem Client des Handys ein. Der Client auf dem Handy weiß, dass eine Bluetoothverbindung vorhanden ist und dass der Benutzer in seinem Profil eine geringere Qualität bei privaten Telefonaten bestimmt hat, um Kosten zu sparen. Das Telefonieren über Bluetooth ist in diesem Fall die günstigere Variante für eine Sprachverbindung. Deswegen initiiert die Erfindung eine Verbindung über die Bluetooth-Schnittstellen und nutzt den nahe stehenden Computern als einen Knoten ins IP-Netzwerk. Der auslösende Anruf kann sowohl durch das Handy als auch durch das zentrale Serversystem erfolgen. Der Server regelt die Terminierung zum gewünschten Teilnehmer; abgerechnet wird dann über eine Festnetzrechnung.

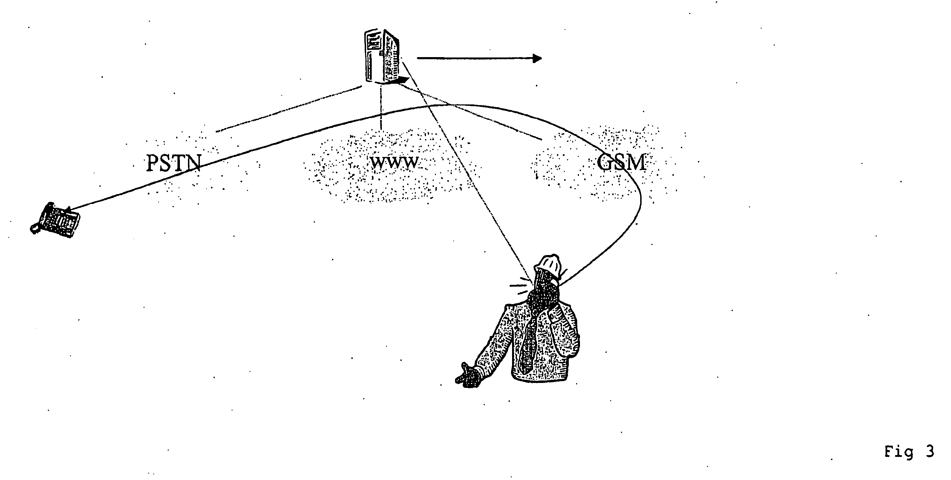

Die Fig. 3 zeigt wiederum ein anderes Szenario. Der Benutzer möchte nun einen Kunden über sein Handy anrufen. Er gibt die Rufnummer ein. Der Client auf dem Handy weiß, dass der Benutzer in seinem Profil eine hohe Qualität bei Geschäftsgesprächen vorgegeben hat. Telefonieren über GSM ist hier die beste Variante für eine Sprachanwendung. Deswegen initiiert der Client eine Verbindung über das GSM-Netzwerk. Der Server regelt danach die Terminierung zum gewünschten Teilnehmer. Abgerechnet wird wiederum über eine Festnetzrechnung.

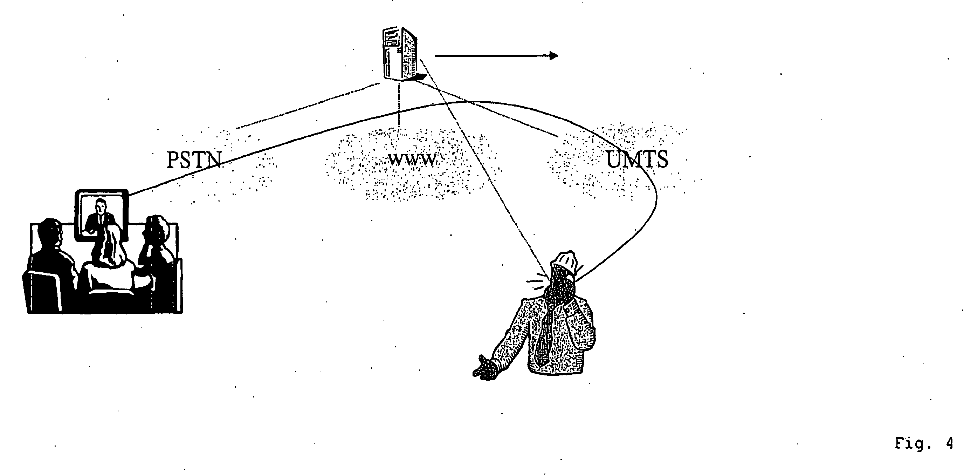

Die Fig. 4 zeigt eine weitere mögliche Ausführungsform der vorliegenden Erfindung. Der Benutzer möchte mit dem Kunden eine Videokonferenz durchführen. Er gibt die Rufnummer ein. Der Client auf dem Endgerät weiß, dass der Benutzer in seinem Profil hohe Qualität bei Geschäftsanwendungen eingegeben hat. Die Videokonferenz über UMTS ist hier die beste Variante für eine breitbandige Geschäftsanwendung. Deswegen initiiert die Clientsoftware eine Verbindung über UMTS. Der Server regelt danach die Terminierung zum gewünschten Teilnehmer. Abgerechnet wird über die Festnetzrechnung.

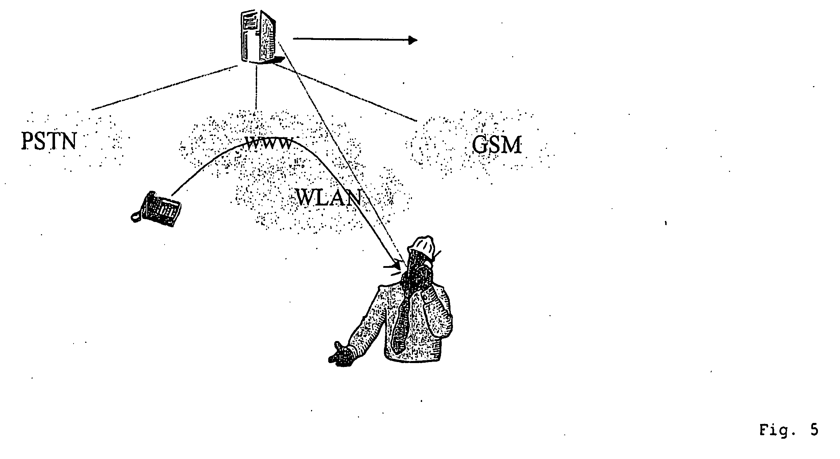

Die Fig. 5 zeigt eine weitere Anwendung. Der Benutzer bekommt einen Anruf von einem SIP-Telefon (VoIP). Die Software auf dem Endgerät und der Server im Netz wissen, dass der Benutzer sich für ein Rebalancing-Modell (Gutschrift auf Telefonrechnungen) für ankommende Anrufe entschieden hat, wenn diese aus einem bestimmten Nummernkreis stammen oder aus einem Netz mit einer schlechten Qualität kommen. Der Client hat dem zentralen Server mitgeteilt, dass der Benutzer sich in einem WLAN-Hotspot befindet. Deswegen initiiert der Server eine Terminierung über das WLAN. Der Anrufer bezahlt einen normalen GSM-Anruf. Der Benutzer partizipiert bei der Einsparung der Terminierungskosten und bekommt eine Gutschrift auf seine private Telefonrechnung.

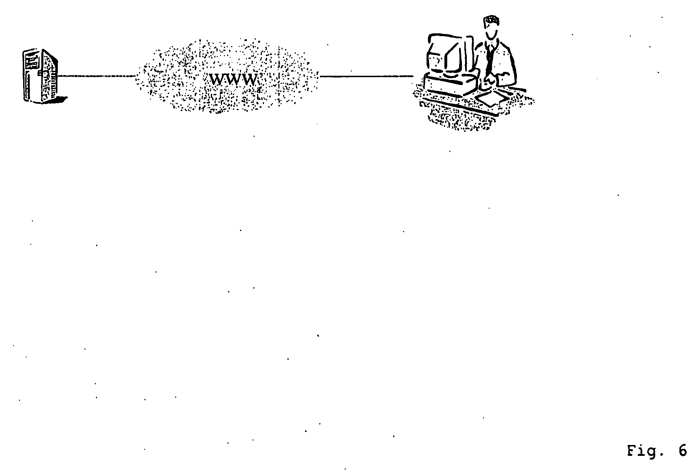

Die Fig. 6 zeigt die Einrichtung eines Profils, was in der Regel über das Internet erfolgt, wobei die für die Registrierung erforderlichen Daten in einer Datenbank auf dem zentralen Server hinterlegt werden. Beim Einrichten des Profils werden Personalien und Abrechnungsdaten hinterlegt. Weiterhin werden einzelne Daten bezüglich der bestehenden Kommunikationseinrichtungen, wie zum Beispiel Festnetzanschluss, Mobilfunkanschluss, Internet Account hinterlegt. Weiterhin wird ein Profil eingegeben, das die Qualität berücksichtigt und gegebenenfalls auch die Kosteninteressen des Nutzers.

## Patentansprüche

1. Verfahren zur Steuerung von eingehenden und ausgehenden Kommunikationsverbindungen mit einer Mehrzahl von Teilnehmerendgeräten mit Netzwerkanschlüssen, wie Telefon, mobiles Endgerät, Computer mit Internetanschluss oder Festnetzanschluss, die über ein oder mehrere Netzwerke mit einem Zentralsystem verbunden sind, das die Adressierung für die Teilnehmerendgeräte bündelt, umfassend folgende Schritte:
- Anmelden eines jeden Teilnehmerendgerätes über das jeweilige Netzwerk am Zentralsystem, wobei die Anmeldung unter Verwendung eines Benutzerkontos erfolgt, und wobei eine Vielzahl von Teilnehmerendgeräten sich an einem Benutzerkonto anmelden können, so dass sie über das Benutzerkonto zentral erreichbar sind, durch die Anmeldung werden zu jedem Teilnehmerendgerät, alle Netzwerkverbindungen und deren Adressierung abgespeichert, sowie die möglichen Dienste und die Qualität der Dienste, weiterhin sind Profile im Benutzerkonto abgelegt, die bei einer eingehenden und ausgehenden Kommunikation durch das Zentralsystem berücksichtigt werden, um die Form der Kommunikation zu bestimmen, umfassend folgende Schritte:
- bei einer ausgehenden Kommunikation wird durch das Teilnehmerendgerät erst das Zentralsystem kontaktiert, das anhand der gewählten Zieladresse oder des Dienstes das Profil bestimmt oder anhand des direkt vorgegebenen Profils eine Verbindung zwischen dem Zielendgerät und dem Teilnehmerendgerät aufbaut, wobei jegliche Arten von Netzwerkverbindungen des Teilnehmerendgerätes und des Zielendgerätes berücksichtigt werden, um die Verbindung entsprechend des Profils aufzubauen,
- bei einer eingehenden Kommunikation wird das Zentralsystem angesprochen, das anhand der Quelladresse des Quellendgerätes oder des gewünschten Dienstes das Profil bestimmt, und es wird eine Verbindung entsprechend des Profils zu einem Teilnehmerendgerät über eine im Profil bestimmte Netzwerkverbindung hergestellt.

2. Verfahren nach dem vorhergehenden Anspruch, wobei die Endgeräte Festnetztelefone, Mobiltelefone, PDA oder PC/Laptop sind.

3. Verfahren nach einem oder mehreren der vorhergehenden Ansprüche, wobei die Endgeräte über Festnetz, DSL, GPRS, UMTS, W-LAN, WiMax, Bluetooth oder Infrarot als Netzwerk mit dem zentralen System verbunden sind.

4. Verfahren nach einem oder mehreren der vorhergehenden Ansprüche, wobei eine verbindungsorientierte Verbindung oder eine paketorientierte Verbindung zwischen den Endgeräten und dem zentralen System besteht.

5. Verfahren nach dem vorhergehenden Anspruch, wobei die paketorientierte Verbindung über das Internet erfolgt und die verbindungsorientierte Verbindung über das Telefonnetz.

6. Verfahren nach einem oder mehreren der vorhergehenden Ansprüche, wobei auf den Endgeräten eine Anwendung installiert ist, die sich am zentralen System anmeldet und diesem mitteilt, welche Kommunikationsverbindungen das Endgerät aufweist.

7. Verfahren nach einem oder mehreren der vorhergehenden Ansprüche, wobei das Endgerät seine aktuelle Position mitteilt und das Profil auf der Basis der Position des Endgerätes eine alternative Kommunikationsverbindung mit einem anderen Endgerät anbietet.

8. Verfahren nach dem vorhergehenden Anspruch, wobei ein Anruf zu einem Mobilgerät auf ein Festnetzgerät umgeleitet wird, wenn sich das Mobilgerät in der Nähe des Festnetzgerätes befindet.

9. Verfahren nach einem oder mehreren der vorhergehenden Ansprüche, wobei ein Anruf zu einem Mobilgerät umgeleitet wird und über eine WLAN-Verbindung als VoIP erfolgt anstatt über eine GSM-Verbindung, wenn z.B. die Qualitätsansprüche gering sind und diese im Profil abgelegt sind.

10. Verfahren nach einem oder mehreren der vorhergehenden Ansprüche, wobei ein Anruf oder eine Verbindungsaufnahme für eine Videokonferenz zu einem Mobilgerät umgeleitet wird und über eine UMTS-Verbindung anstatt über eine GSM-Verbindung erfolgt, wenn die Qualitätsansprüche hoch sind.

11. Verfahren nach einem oder mehreren der vorhergehenden Ansprüche, wobei eine ausgehende oder eingehende Verbindung über Bluetooth erfolgt, wenn das Handy über eine Bluetooth-Verbindung zum Festnetztelefon verfügt.

12. Verfahren nach einem oder mehreren der vorhergehenden Ansprüche, wobei eine Verbindung zu einem Festnetztelefon über das Internet als VoIP erfolgt, wenn die Qualitätsansprüche gering sind.

13. Verfahren nach einem oder mehreren der vorhergehenden Ansprüche, wobei eine elektronische Gutschriftentransaktion für den Angerufenen durch das zentrale System ausgelöst wird, wenn eine kostengünstigere Verbindung durch das zentrale System auf der Basis der Profile des Angerufenen erfolgt.

14. Vorrichtung zur Steuerung von eingehenden und ausgehenden Kommunikationsverbindungen zwischen einer Mehrzahl von Teilnehmerendgeräten mit Netzwerkanschlüssen, wie Telefon, mobiles Endgerät, Computer mit Internetanschluss oder Festnetzanschluss, die über ein oder mehrere Netzwerke mit der Vorrichtung verbunden sind, umfassend:
- Mittel zum Anmelden eines jeden Teilnehmerendgerätes über das Netzwerk an der Vorrichtung, wobei die Anmeldung unter Verwendung eines Benutzerkontos erfolgt, und wobei eine Vielzahl von Teilnehmerendgeräten sich an einem Benutzerkonto anmelden können, durch die Anmeldung werden zu jedem Teilnehmerendgerät, alle Netzwerkverbindungen und deren Adressierung abgespeichert, sowie die möglichen Dienste und die Qualität der Dienste, ferner sind Profile abgelegt, die bestimmen für welche Dienste welche Teilnehmerendgeräte zu verwenden sind, so dass die Adressierung für die Teilnehmerendgeräte gebündelt ist,
- Mittel zur Kontaktaufnahme mit Teilnehmerendgeräten, wobei bei einer ausgehenden Kommunikation durch ein Teilnehmerendgerät erst die Vorrichtung kontaktiert wird, wobei anhand der gewählten Zieladresse oder des Dienstes oder anhand eines direkt vorgegebenen Profils gewählt wird, um eine Verbindung zwischen dem Zielendgerät und dem Teilnehmerendgerät aufzubauen, wobei jegliche Art von Netzwerkverbindungen des Teilnehmerendgerätes und des Zielendgerätes berücksichtigt werden, um die Verbindung entsprechend des Profils aufzubauen,
- Mittel, die bei einer eingehenden Kommunikation anhand der Quelladresse oder des Dienstes des Quellendgerätes oder anhand eines direkt vorgegebenen Profils das Profil bestimmen, und eine Verbindung entsprechend des Profils zu einem Teilnehmerendgerät über eine im Profil bestimmte Netzwerkverbindung herstellen.

15. Vorrichtung nach dem vorhergehenden Anspruch, wobei die Endgeräte Festnetztelefone, Mobiltelefone, PDA oder PC/Laptop sind.

16. Vorrichtung nach einem oder mehreren der vorhergehenden Vorrichtungsansprüche, wobei die Endgeräte über Festnetz, DSL, GPRS, UMTS, W-LAN, WiMax, Bluetooth oder Infrarot als Netzwerk mit dem zentralen System verbunden sind.

17. Vorrichtung nach einem oder mehreren der vorhergehenden Vorrichtungsansprüche, wobei eine verbindungsorientierte Verbindung oder eine paketorientierte Verbindung zwischen den Endgeräten und dem zentralen System besteht.

18. Vorrichtung nach dem vorhergehenden Anspruch, wobei die paketorientierte Verbindung über das Internet erfolgt und die verbindungsorientierte Verbindung über das Telefonnetz.

19. Vorrichtung nach einem oder mehreren der vorhergehenden Vorrichtungsansprüche, wobei auf den Endgeräten eine Anwendung installiert ist, die so ausgebildet ist, dass sie sich am zentralen System anmeldet und diesem mitteilt, welche Kommunikationsverbindungen das Endgerät aufweist.

20. Vorrichtung nach einem oder mehreren der vorhergehenden Vorrichtungsansprüche, wobei das Endgerät so ausgebildet ist, dass es seine aktuelle Position mitteilt und das Profil auf der Basis der Position des Endgerätes eine alternative Kommunikationsverbindung mit einem anderen Endgerät anbietet.

21. Vorrichtung nach dem vorhergehenden Anspruch, wobei ein Anruf zu einem Mobilgerät auf ein Festnetzgerät umgeleitet wird, wenn sich das Mobilgerät in der Nähe des Festnetzgerätes befindet.

22. Vorrichtung nach einem oder mehreren der vorhergehenden Ansprüche, wobei ein Anruf zu einem Mobilgerät umgeleitet wird und über eine WLAN-Verbindung als VoIP erfolgt, anstatt über eine GSM-Verbindung, wenn die Qualitätsansprüche gering sind.

23. Vorrichtung nach einem oder mehreren der vorhergehenden Vorrichtungsansprüche, wobei ein Anruf oder eine Verbindungsaufnahme für eine Videokonferenz zu einem Mobilgerät umgeleitet wird und über eine UMTS-Verbindung, anstatt über eine GSM-Verbindung erfolgt, wenn die Qualitätsansprüche hoch sind.

24. Vorrichtung nach einem oder mehreren der vorhergehenden Vorrichtungsansprüche, wobei eine ausgehende oder eingehende Verbindung über Bluetooth erfolgt, wenn das Handy über eine Bluetooth-Verbindung zum Festnetztelefon verfügt.

25. Vorrichtung nach einem oder mehreren der vorhergehenden Vorrichtungsansprüche, wobei eine Verbindung zu einem Festnetztelefon über das Internet als VoIP erfolgt, wenn die Qualitätsansprüche gering sind.

26. Vorrichtung nach einem oder mehreren der vorhergehenden Vorrichtungsansprüche, wobei eine elektronische Gutschriftentransaktion für den Angerufenen ausgelöst wird, wenn eine kostengünstigere Verbindung auf der Basis der Profile des Angerufenen erfolgt.

27. Endgerät, das so ausgebildet ist, dass es sich an ein zentrales Serversystem nach den vorhergehenden Vorrichtungsansprüchen anmeldet und den Status aller Kommunikationsverbindungen regelmäßig oder auf Anforderung an das zentrale Serversystem überträgt, um ein Verfahren nach dem Anspruch 1 zu ermöglichen.

## Claims

1. Method for controlling incoming and outgoing communication connections with a plurality of subscriber terminals with network connections, such as telephones, mobile terminals, and computers with Internet connections or landline connections, which are connected through one or more networks to a central system that bundles the addressing for the subscriber terminals, comprising the following steps:
- Logging in of each subscriber terminal with the central system through the applicable network, wherein the login makes use of a user account, and wherein a plurality of subscriber terminals can log into a user account so that they are centrally reachable by means of the user account, all network connections and their addressing are stored for every subscriber terminal by means of the login, as are the possible services and the quality of the services, moreover profiles are stored in the user account which are taken into account by the central system in the event of incoming and outgoing communication in order to determine the form of communication, comprising the following steps:
- In the case of an outgoing communication, the subscriber terminal first contacts the central system, which determines the profile based on the dialed destination address, the service or the directly specified profile, and sets up a connection between the subscriber terminal and the dialed terminal, wherein all types of network connection between the subscriber terminal and the dialed terminal are taken into account in order to set up the connection according to the profile,
- In the case of an incoming communication, contact is made with the central system, which determines the profile based on the originating address of the originating terminal or of the desired service, and a connection to a subscriber terminal is established in accordance with the profile through a network connection determined in the profile.

2. Method according to the preceding claim, wherein the terminals are landline telephones, mobile telephones, PDAs, or PCs/laptops.

3. Method according to one or more of the preceding claims, wherein the terminals are connected to the central system through a landline network, DSL, GPRS, UMTS, WLAN, WiMax, Bluetooth or infrared as the network.

4. Method according to one or more of the preceding claims, wherein a connection-oriented or packet-oriented connection exists between the terminals and the central system.

5. Method according to the preceding claim, wherein the packet-oriented connection takes place over the Internet and the connection-oriented connection takes place through the telephone network.

6. Method according to one or more of the preceding claims, wherein there is installed on the terminals an application that logs in to the central system and communicates thereto what communication connections the terminal has.

7. Method according to one or more of the preceding claims, wherein the terminal communicates its present position, and the profile, on the basis of the position of the terminal, offers an alternative communication connection to another terminal.

8. Method according to the preceding claim, wherein a call to a mobile device is rerouted to a landline device when the mobile device is in the vicinity of the landline device.

9. Method according to one or more of the preceding claims, wherein a call is rerouted to a mobile device and takes place through a WLAN connection as VoIP instead of through a GSM connection when, for example, the quality requirements are low and these are stored in the profile.

10. Method according to one or more of the preceding claims, wherein a call or a connection reception for a videoconference is rerouted to a mobile device and takes place through a UMTS connection instead of through a GSM connection when the quality requirements are high.

11. Method according to one or more of the preceding claims, wherein an outgoing or incoming connection takes place through Bluetooth when the cell phone has a Bluetooth connection to the landline telephone.

12. Method according to one or more of the preceding claims, wherein a connection to a landline telephone takes place through the Internet as VoIP when the quality requirements are low.

13. Method according to one or more of the preceding claims, wherein an electronic credit entry transaction for the called party is initiated by the central system when a more economical connection is made by the central system on the basis of the profile of the called party.

14. Device for controlling incoming and outgoing communication connections between a plurality of subscriber terminals with network connections, such as telephones, mobile terminals, and computers with Internet connections or landline connections, which are connected to the device through one or more networks, comprising the following:
- Means for logging in of each subscriber terminal to the device through the network, wherein the login makes use of a user account, and wherein a plurality of subscriber terminals can log into a user account, all network connections and their addressing are stored for every subscriber terminal by means of the login, as are the possible services and the quality of the services, moreover profiles are stored that determine what subscriber terminals are to be used for what services, so that the addressing for the subscriber terminals is bundled,
- Means for establishing contact with subscriber terminals, wherein in the case of an outgoing communication the subscriber terminal first contacts the device, wherein dialing takes place on the basis of the dialed destination address or the service or on the basis of a directly specified profile in order to set up a connection between the dialed terminal and the subscriber terminal, wherein all types of network connection between the subscriber terminal and the dialed terminal are taken into account in order to set up the connection according to the profile,
- Means that, in the case of an incoming connection, determine the profile on the basis of the originating address or the service of the originating device or on the basis of a directly specified profile, and establish a connection according to the profile with a subscriber terminal through a network connection determined in the profile.

15. Device according to the preceding claim, wherein the terminals are landline telephones, mobile telephones, PDAs, or PCs/laptops.

16. Device according to one or more of the preceding device claims, wherein the terminals are connected to the central system through a landline network, DSL, GPRS, UMTS, WLAN, WiMax, Bluetooth or infrared as the network.

17. Device according to one or more of the preceding device claims, wherein a connection-oriented or packet-oriented connection exists between the terminals and the central system.

18. Device according to the preceding claim, wherein the packet-oriented connection takes place over the Internet and the connection-oriented connection takes place through the telephone network.

19. Device according to one or more of the preceding device claims, wherein there is installed on the terminals an application that is designed such that it logs in to the central system and communicates thereto what communication connections the terminal has.

20. Device according to one or more of the preceding device claims, wherein the terminal is designed such that it communicates its present position, and the profile, on the basis of the position of the terminal, offers an alternative communication connection to another terminal.

21. Device according to the preceding claim, wherein a call to a mobile device is rerouted to a landline device when the mobile device is in the vicinity of the landline device.

22. Device according to one or more of the preceding claims, wherein a call is rerouted to a mobile device and takes place through a WLAN connection as VoIP instead of through a GSM connection when the quality requirements are low.

23. Device according to one or more of the preceding device claims, wherein a call or a connection reception for a videoconference is rerouted to a mobile device and takes place through a UMTS connection instead of through a GSM connection when the quality requirements are high.

24. Device according to one or more of the preceding device claims, wherein an outgoing or incoming connection takes place through Bluetooth when the cell phone has a Bluetooth connection to the landline telephone.

25. Device according to one or more of the preceding device claims, wherein a connection to a landline telephone takes place through the Internet as VoIP when the quality requirements are low.

26. Device according to one or more of the preceding device claims, wherein an electronic credit entry transaction for the called party is initiated when a more economical connection is made on the basis of the profiles of the called party.

27. Terminal designed such that it logs in to a central server system according to the preceding device claims and transmits the status of all communication connections to the central server system at regular intervals or on request in order to make possible a method according to claim 1.

## Revendications

1. Procédé de gestion de connexions de communication entrantes et sortantes avec une pluralité de terminaux d'abonné disposant de connexions réseau, tels que téléphone, terminal mobile, ordinateur avec connexion à l'internet ou au réseau fixe, reliés, par l'intermédiaire d'un ou plusieurs réseaux, à un système central qui agrège l'adressage pour les terminaux d'abonné, comprenant les étapes suivantes :
- chaque terminal d'abonné se connecte au système central par l'intermédiaire du réseau respectif, la connexion s'effectuant moyennant un compte utilisateur, et une pluralité de terminaux d'abonné pouvant se connecter à un compte utilisateur de façon à être joignable de manière centrale par l'intermédiaire du compte utilisateur, la connexion entraînant, pour chaque terminal d'abonné, le stockage de l'ensemble des connexions réseau et de leur adressage, ainsi que des services possibles et de la qualité des services, des profils étant également stockés dans le compte utilisateur qui sont pris en compte par le système central lors d'une communication entrante et sortante afin de déterminer la forme de la communication, comprenant les étapes suivantes :
- lors d'une communication sortante, le terminal d'abonné contacte d'abord le système central qui, moyennant l'adresse cible sélectionnée ou le service, détermine le profil ou qui, moyennant le profil par défaut, établit une liaison entre le terminal cible et le terminal d'abonné, tous types de connexions réseau du terminal d'abonné et du terminal cible étant pris en compte pour établir la liaison conformément au profil,
- lors d'une communication entrante, le système central est contacté et détermine le profil moyennant l'adresse source du terminal source ou le service souhaité, et une liaison conformément au profil est établie vers un terminal d'abonné par l'intermédiaire d'une connexion réseau déterminée dans le profil.

2. Procédé selon la revendication précédente dans lequel les terminaux sont des téléphones de réseau fixe, des téléphones mobiles, des PDA ou des PC/ordinateurs portables.

3. Procédé selon l'une ou plusieurs des revendications précédentes dans lequel les terminaux sont reliés au système central par un réseau fixe ou par un réseau de type DSL, GPRS, UMTS, W-LAN, WiMax, Bluetooth ou infrarouge.

4. Procédé selon l'une ou plusieurs des revendications précédentes dans lequel une liaison orientée connexion ou une liaison orientée paquet existe entre les terminaux et le système central.

5. Procédé selon la revendication précédente dans lequel la liaison orientée paquet passe par l'internet et la liaison orientée connexion passe par le réseau de téléphone.

6. Procédé selon l'une ou plusieurs des revendications précédentes dans lequel une application qui se connecte au système central et lui communique les connexions de communication dont dispose le terminal est installée sur les terminaux.

7. Procédé selon l'une ou plusieurs des revendications précédentes dans lequel le terminal communique sa position actuelle et le profil propose, sur la base de la position du terminal, une connexion de communication alternative avec un autre terminal.

8. Procédé selon la revendication précédente dans lequel un appel vers un appareil mobile est redirigé sur un appareil de réseau fixe lorsque l'appareil mobile se trouve à proximité de l'appareil de réseau fixe.

9. Procédé selon l'une ou plusieurs des revendications précédentes dans lequel un appel vers un appareil mobile est redirigé et passe par une liaison WLAN comme VoIP au lieu de passer par une liaison GSM lorsque les exigences de qualité sont faibles et qu'elles sont stockées dans le profil, par exemple.

10. Procédé selon l'une ou plusieurs des revendications précédentes dans lequel un appel ou une communication pour une vidéoconférence vers un appareil mobile est redirigé et passe par une liaison UMTS au lieu de passer par une liaison GSM, lorsque les exigences de qualité sont élevées.

11. Procédé selon l'une ou plusieurs des revendications précédentes dans lequel une communication sortante ou entrante passe par Bluetooth lorsque le téléphone mobile dispose d'une connexion Bluetooth vers le téléphone de réseau fixe.

12. Procédé selon l'une ou plusieurs des revendications précédentes dans lequel une connexion vers un téléphone de réseau fixe passe par l'internet comme VoIP lorsque les exigences de qualité sont faibles.

13. Procédé selon l'une ou plusieurs des revendications précédentes dans lequel une transaction de crédit électronique est déclenchée par le système central pour l'appelé lorsqu'une connexion à moindre coût est effectuée par le système central sur la base des profils de l'appelé.

14. Dispositif de gestion de connexions de communication entrantes et sortantes entre une pluralité de terminaux d'abonné disposant de connexions réseau, tels que téléphone, terminal mobile, ordinateur avec connexion à l'internet ou au réseau fixe, reliés au dispositif par l'intermédiaire d'un ou plusieurs réseaux, comprenant:
- des moyens pour connecter chaque terminal d'abonné au dispositif par l'intermédiaire du réseau, la connexion s'effectuant moyennant un compte utilisateur, et une pluralité de terminaux d'abonné pouvant se connecter à un compte utilisateur, la connexion entraînant, pour chaque terminal d'abonné, le stockage de l'ensemble des connexions réseau et de leur adressage, ainsi que des services possibles et de la qualité des services, des profils étant également stockés qui déterminent quels terminaux d'abonné utiliser pour quels services de manière que l'adressage pour les terminaux d'abonné soit agrégé,
- des moyens pour entrer en contact avec des terminaux d'abonné, un terminal d'abonné contactant d'abord le dispositif lors d'une communication sortante, l'établissement d'une liaison entre le terminal cible et le terminal d'abonné s'effectuant moyennant l'adresse cible sélectionnée ou le service ou un profil par défaut, tous types de connexions réseau du terminal d'abonné et du terminal cible étant pris en compte pour établir la liaison conformément au profil,
- des moyens qui, lors d'une communication entrante, déterminent le profil moyennant l'adresse source ou le service du terminal source ou moyennant un profil par défaut, et établissent une liaison conformément au profil vers un terminal d'abonné par l'intermédiaire d'une connexion réseau déterminée dans le profil.

15. Dispositif selon la revendication précédente, dans lequel les terminaux sont des téléphones de réseau fixe, des téléphones mobiles, des PDA ou des PC/ordinateurs portables.

16. Dispositif selon l'une ou plusieurs des revendications de dispositif précédentes dans lequel les terminaux sont reliés au système central par un réseau fixe ou par un réseau de type DSL, GPRS, UMTS, W-LAN, WiMax, Bluetooth ou infrarouge.

17. Dispositif selon l'une ou plusieurs des revendications de dispositif précédentes dans lequel une liaison orientée connexion ou une liaison orientée paquet existe entre les terminaux et le système central.

18. Dispositif selon la revendication précédente dans lequel la liaison orientée paquet passe par l'internet et la liaison orientée connexion passe par le réseau de téléphone.

19. Dispositif selon l'une ou plusieurs des revendications de dispositif précédentes dans lequel une application qui est réalisée de manière à se connecter au système central et à lui communiquer les connexions de communication dont dispose le terminal, est installée sur les terminaux.

20. Dispositif selon l'une ou plusieurs des revendications de dispositif précédentes dans lequel le terminal est réalisé de manière à communiquer sa position actuelle et dans lequel le profil propose, sur la base de la position du terminal, une connexion de communication alternative avec un autre terminal.

21. Dispositif selon la revendication précédente dans lequel un appel vers un appareil mobile est redirigé sur un appareil de réseau fixe lorsque l'appareil mobile se trouve à proximité de l'appareil de réseau fixe.

22. Dispositif selon l'une ou plusieurs des revendications précédentes dans lequel un appel vers un appareil mobile est redirigé et passe par une liaison WLAN comme VoIP au lieu de passer par une liaison GSM lorsque les exigences de qualité sont faibles.

23. Dispositif selon l'une ou plusieurs des revendications de dispositif précédentes dans lequel un appel ou une communication pour une vidéoconférence vers un appareil mobile est redirigé et passe par une liaison UMTS au lieu de passer par une liaison GSM lorsque les exigences de qualité sont élevées.

24. Dispositif selon l'une ou plusieurs des revendications de dispositif précédentes dans lequel une communication sortante ou entrante passe par Bluetooth lorsque le téléphone mobile dispose d'une connexion Bluetooth vers le téléphone de réseau fixe.

25. Dispositif selon l'une ou plusieurs des revendications de dispositif précédentes dans lequel une connexion vers un téléphone de réseau fixe passe par l'internet comme VoIP lorsque les exigences de qualité sont faibles.

26. Dispositif selon l'une ou plusieurs des revendications de dispositif précédentes dans lequel une transaction de crédit électronique est déclenchée pour l'appelé lorsqu'une connexion à moindre coût est effectuée sur la base des profils de l'appelé.

27. Terminal qui est réalisé de manière à se connecter à un système de serveur central selon les revendications de dispositif précédentes et qui transmet au système de serveur central l'état de l'ensemble des connexions de communication de manière régulière ou sur demande afin de permettre un procédé selon la revendication 1.
